# EUROPÄISCHE PATENTSCHRIFT

(11) **EP 3 410 835 B1**
(45) Veröffentlichungstag und Bekanntmachung des Hinweises auf die Patenterteilung: **04.12.2019**
(21) Anmeldenummer: 17705007.7
(22) Anmeldetag: 18.01.2017
(51) Int. Cl.: A01B 39/08, A01B 39/18

(54) **FINGERHACKENWERKZEUG FÜR EIN BODENBEARBEITUNGSGERÄT; VERFAHREN ZUR MECHANISCHEN BEKÄMPFUNG VON BEIKRÄUTERN IN REIHENKULTUREN**
FINGER WEEDING TOOL FOR A SOIL CULTIVATION DEVICE, METHOD FOR MECHANICALLY FIGHTING WEEDS IN ROW PLANTINGS
BINEUSE À DOIGTS POUR MACHINE DE TRAVAIL DU SOL, PROCÉDÉ POUR COMBATTRE MÉCANIQUEMENT LES ADVENTICES DANS DES CULTURES EN LIGNES

(30) Priorität: 03.02.2016 DE 102016001416
(43) Veröffentlichungstag der Anmeldung: 12.12.2018
(73) Patentinhaber: K.U.L.T. Kress Umweltschonende Landtechnik GmbH, 71665 Vaihingen/Enz (DE)
(72) Erfinder: KIRCHHOFF, Christian, 71665 Vaihingen/Enz (DE)
(74) Vertreter: Patentanwälte Schuster, Müller & Partner mbB
(86) Internationale Anmeldenummer: PCT/DE2017/100024
(87) Internationale Veröffentlichungsnummer: WO 2017/133724

(56) Entgegenhaltungen:
- EP-A1- 1 116 427
- CA-A- 1 054 841
- US-A- 2 215 364
- US-A- 4 312 409

## Beschreibung

### Stand der Technik

Die Erfindung geht aus von einem Fingerhackenwerkzeug für ein Bodenbearbeitungsgerät, nach der Gattung des Anspruchs 1, und einem Verfahren zur mechanischen Bekämpfung von Beikräutern in Reihenkulturen, nach der Gattung des Anspruchs 7.

Bodenbearbeitungsgeräte, die zur mechanischen Bodenbearbeitung und insbesondere zur Beikrautbekämpfung innerhalb einer oder mehrerer Kulturreihen gleichzeitig eingesetzt werden, gehören seit langem zum Stand der Technik. So ist aus der europäischen Patentschrift EP 1 127 481 B1 und aus der europäischen Patentanmeldung EP 1 116 427 A1 eine Fingerhacke zur Unkrautbeseitigung, mit mechanischem Antrieb durch Bodenantriebselemente bekannt, die mit über den Bodenantriebselementen angeordneten, drehbeweglichen Jätefingern ausgestattet ist. Zwar ist es mit dieser vorbekannten Fingerhacke möglich, die Bodenbearbeitung ohne Beeinträchtigung der Kulturpflanze vom Zwischenraum zweier Reihen auch in die Reihen zu verlagern, doch werden dadurch in der Regel nur schwächer verwurzelte Beikräuter, die samt ihren Wurzeln aus dem Boden gezogen werden können, bekämpft.

Des Weiteren sind aus der deutschen Patentschrift DE 196 07 602 C2 ein Räumfinger aufweisendes Ausräumgerät für eine Sämaschine, aus dem amerikanischen Patent US 4 646 850 A ein Bodenbearbeitungsgerät mit sternförmig, drehbar angeordneten Bodenbearbeitungswerkzeugen, aus dem kanadischen Patent CA1 054 841 A eine Bodenfräse, aus der amerikanischen Patentanmeldung US 2 215 364 A eine Ackerfräse und aus dem amerikanischen Patent US 4 312 409 A eine rotierbare landwirtschaftliche Hacke bekannt.

### Die Erfindung und ihre Vorteile

Das erfindungsgemäße Fingerhackenwerkzeug für ein Bodenbearbeitungsgerät, das mindestens einen Finger aufweist, mit den Merkmalen des Anspruchs 1, und das erfindungsgemäße Verfahren zur mechanischen Bekämpfung von Beikräutern in Reihenkulturen, mit den Merkmalen des Anspruchs 7, haben demgegenüber den Vorteil, dass, da mindestens ein Finger mindestens ein Mittel zum Aufnehmen und/oder Fortschaffen von Lockermaterialien (z.B. Erde, Sand, Steine) aufweist, ein Eintrag von Lockermaterialien in die Reihe oder ein Austrag von Lockermaterialien aus der Reihe ermöglicht wird, wodurch neben den schwächer verwurzelten Beikräutern auch stärker verwurzelte Beikräuter bekämpft werden können. Somit können mit dem erfindungsgemäßen Fingerhackenwerkzeug neben dem Haupteffekt der Entwurzelung der Beikräuter noch zwei weitere Effekte genutzt werden, nämlich ein durch den Eintrag von Lockermaterialien in die Reihe bewirkter Häufeleffekt, der den Wuchs der Kulturpflanze unterstützt und/oder fest verwurzelte Beikräuter verschüttet und ein durch den Austrag von Lockermaterialien aus der Reihe bewirkter Abhäufeleffekt, durch den z.B. beim Anhäufeln eingetragene Erde nach dem Absterben der verschütteten Beikräuter wieder aus der Reihe befördert wird. Dabei beeinflusst die Form eines Sternrades (z.B. Kunststoffscheibe) eines erfindungsgemäßen Fingerhackenwerkzeuges dessen Aggressivität zu der Bodenoberfläche, wodurch alle drei Effekte des erfindungsgemäßen Fingerhackenwerkzeuges beeinflusst werden.

Nach einer vorteilhaften Ausgestaltung des erfindungsgemäßen Fingerhackenwerkzeuges ist das mindestens eine Mittel zum Aufnehmen und/oder Fortschaffen von Lockermaterialien eine Erhebung und/oder ist das mindestens eine Mittel zum Aufnehmen und/oder Fortschaffen von Lockermaterialien eine Vertiefung.

Nach einer zusätzlichen vorteilhaften Ausgestaltung des erfindungsgemäßen Fingerhackenwerkzeuges weist der mindestens eine Finger mindestens ein Fingerende auf, an dem das Mittel zum Aufnehmen und/oder Fortschaffen von Lockermaterialien angeordnet ist.

Nach einer zusätzlichen vorteilhaften Ausgestaltung des erfindungsgemäßen Fingerhackenwerkzeuges weist das Fingerhackenwerkzeug zumindest teilweise eine strukturierte Oberfläche auf, so dass im Gegensatz zu einer glatten Oberfläche ein Fortschaffen von Lockermaterialien vereinfacht wird.

Nach einer zusätzlichen vorteilhaften Ausgestaltung des erfindungsgemäßen Fingerhackenwerkzeuges weist das Fingerhackenwerkzeug zumindest teilweise eine texturierte (z.B. wabenförmige) Oberfläche auf.

Nach einer zusätzlichen vorteilhaften Ausgestaltung des erfindungsgemäßen Fingerhackenwerkzeuges ist mindestens ein Finger axial und/oder radial gebogen.

Nach einer zusätzlichen vorteilhaften Ausgestaltung des erfindungsgemäßen Fingerhackenwerkzeuges ist das Fingerhackenwerkzeug zumindest teilweise aus Kunststoff gefertigt. Bevorzugt wird es im Spritzgussverfahren hergestellt.

Nach einer vorteilhaften Ausgestaltung des erfindungsgemäßen Verfahrens zur mechanischen Bekämpfung von Beikräutern in Reihenkulturen mittels eines mindestens ein Fingerhackenwerkzeug aufweisendes Bodenbearbeitungsgerätes, insbesondere eine Fingerhacke, bei dem das Fingerhackenwerkzeug mindestens einen Finger aufweist, der mindestens ein Mittel zum Aufnehmen und/oder Fortschaffen von Lockermaterialien aufweist, wodurch je nach Geräteeinstellung des Bodenbearbeitungsgerätes (Fingerhacke) ein Eintrag von Lockermaterialien in die Reihe oder ein Austrag von Lockermaterialien aus der Reihe ermöglicht wird, wird als Fingerhackenwerkzeug ein Fingerhackenwerkzeug gemäß einem der Ansprüche 1 bis 7 eingesetzt.

Weitere Vorteile und vorteilhafte Ausgestaltung der Erfindung sind der nachfolgenden Beschreibung, der Zeichnung und den Ansprüchen entnehmbar.

### Zeichnung

Bevorzugte Ausführungsbeispiele des erfindungsgemäßen Gegenstands sind in der Zeichnung dargestellt und werden im Folgenden näher erläutert. Es zeigen
- Fig. 1: eine Seitenansicht eines zum Stand der Technik gehörenden Fingerhackenwerkzeuges,
- Fig. 2: eine perspektivische Ansicht eines zu einem erfindungsgemäßen Fingerhackenwerkzeuges gehörenden Sternrades,
- Fig. 3: eine Aufsicht des Sternrades, gemäß Fig. 2,
- Fig. 4: eine Seitenansicht des Sternrades, gemäß Fig. 2,
- Fig. 5: eine Schnittzeichnung des Sternrades, gemäß der Schnittlinie A - A aus Fig. 3,
- Fig. 6: eine perspektivische Ansicht eines zu einem erfindungsgemäßen Fingerhackenwerkzeuges gehörenden Sternrades,
- Fig. 7: eine Aufsicht des Sternrades, gemäß Fig. 6,
- Fig. 8: eine Schnittzeichnung des Sternrades, gemäß der Schnittlinie A - A aus Fig. 7,
- Fig. 9: eine perspektivische Ansicht eines erfindungsgemäßen Fingerhackenwerkzeuges mit axial gebogenen Fingern,
- Fig. 10: eine Teilansicht des erfindungsgemäßen Fingerhackenwerkzeuges, gemäß Fig. 9,
- Fig. 11: eine perspektivische Ansicht eines erfindungsgemäßen Fingerhackenwerkzeuges mit radial gebogenen Fingern und
- Fig. 12: eine andere Ansicht des erfindungsgemäßen Fingerhackenwerkzeuges, gemäß Fig. 11.

### Beschreibung des Ausführungsbeispiels

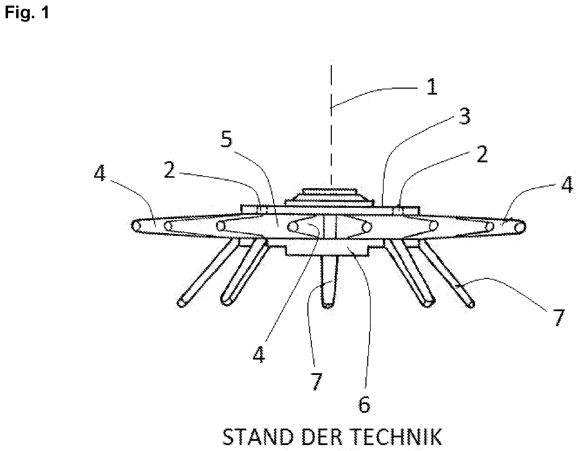

Fig. 1 zeigt eine Seitenansicht eines zum Stand der Technik gehörenden Fingerhackenwerkzeuges, das um eine Drehachse 1 drehbar an dem nicht dargestellten Bodenbearbeitungsgerät anordbar ist. Mittels Verschraubungen 2 ist eine Deckplatte 3 mit einem mehrere Finger 4 (Jätefinger) aufweisenden Sternrad 5 verbunden. Der Antrieb des Fingerhackenwerkzeuges erfolgt mechanisch mittels in den Boden eindringenden, an einer Antriebsplatte 6, die mit dem Sternrad 5 verbunden ist, angeordneten Bodenantriebselementen 7.

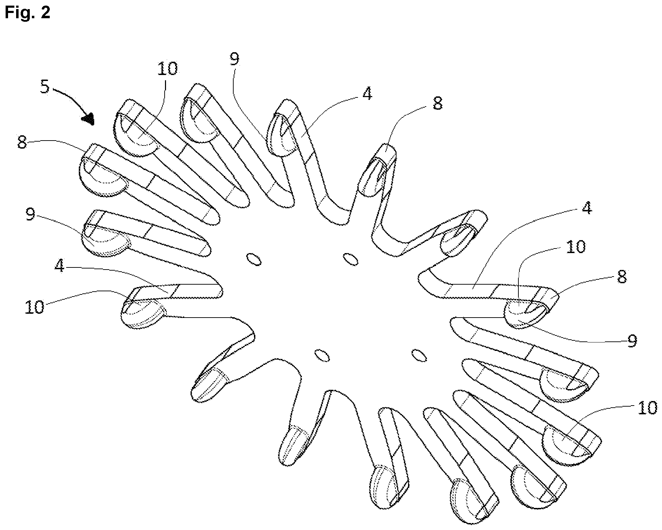

Fig. 2 zeigt eine perspektivische Ansicht eines zu einem erfindungsgemäßen Fingerhackenwerkzeuges gehörenden Sternrades 5. Die Finger 4 weisen Fingerenden 8 auf, an denen Mittel zum Aufnehmen und/oder Fortschaffen von Lockermaterialien in Form von Erhebungen 9 angeordnet sind. Bevorzugt sind die Erhebungen 9, die nicht zwingend an jedem Finger 4 vorhanden sein müssen, an der dem Boden zugewandten Seite eines Sternrades 5 angeordnet. Denkbar ist auch, dass die Erhebungen 9 an der Oberseite eines Fingers 4 angeordnet sind oder dass Erhebungen 9 an der Unter- und Oberseite von Fingern 4 oder alternativ oder ergänzend seitlich am Finger 4 angeordnet sind. Die Erhebungen 9 weisen bevorzugt laffenförmige Einbuchtungen 10, die an einer Seite der Erhebung 9, wodurch diese zu einem Löffel wird, oder beidseitig der Erhebung 9 angeordnet sein können, auf, durch die ein Aufnehmen und/oder Fortschaffen von Lockermaterialien erleichtert wird.

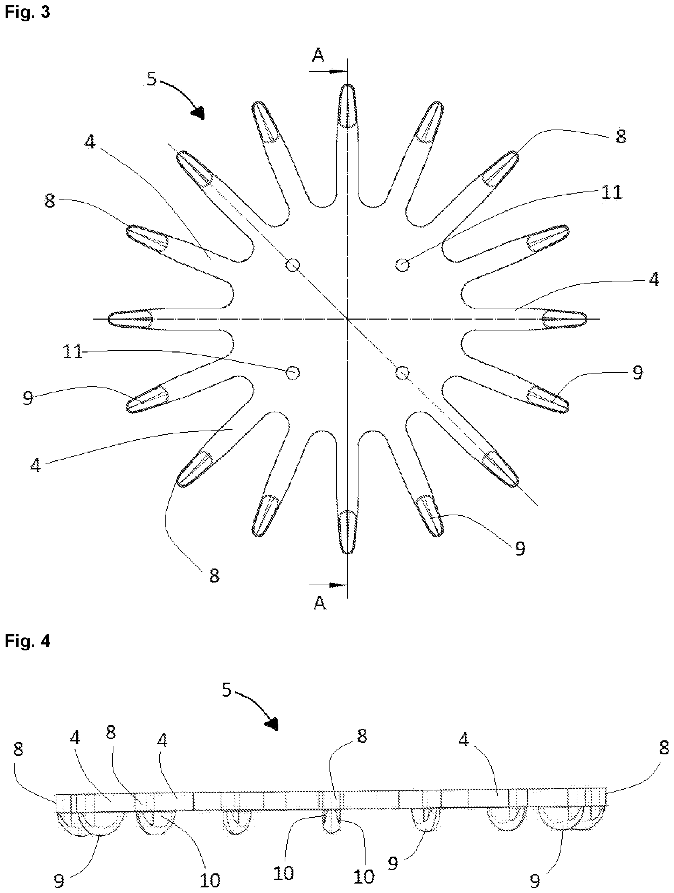

Fig. 3 zeigt eine Aufsicht des Sternrades 5, gemäß Fig. 2. Bohrungen 11 ermöglichen ein Verschrauben des Sternrades 5 mit einer nicht dargestellten Deckplatte sowie mit einer nicht dargestellten Antriebsplatte.

Fig. 4 zeigt eine Seitenansicht des Sternrades 5, gemäß Fig. 2.

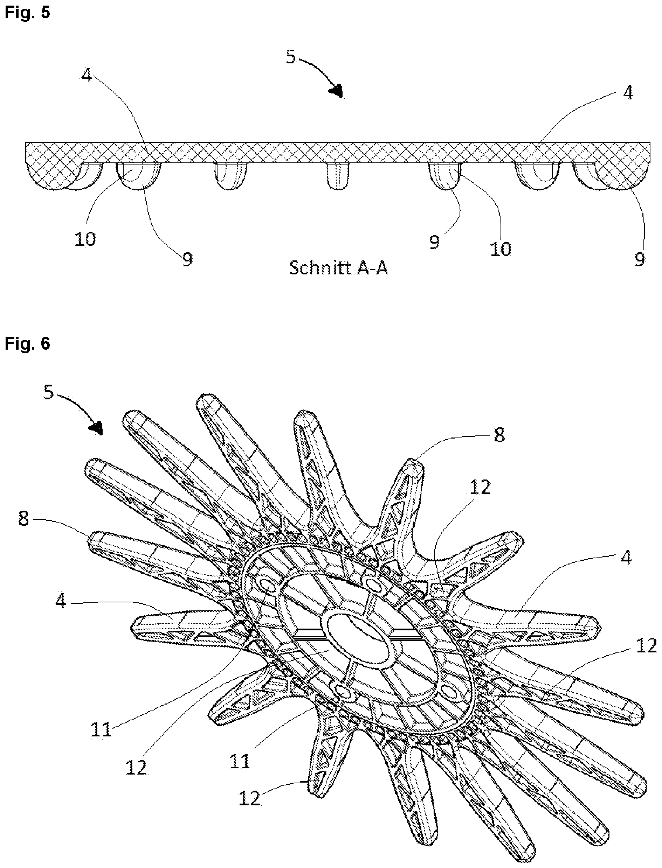

Fig. 5 zeigt eine Schnittzeichnung des Sternrades 5, gemäß der Schnittlinie A - A aus Fig. 3.

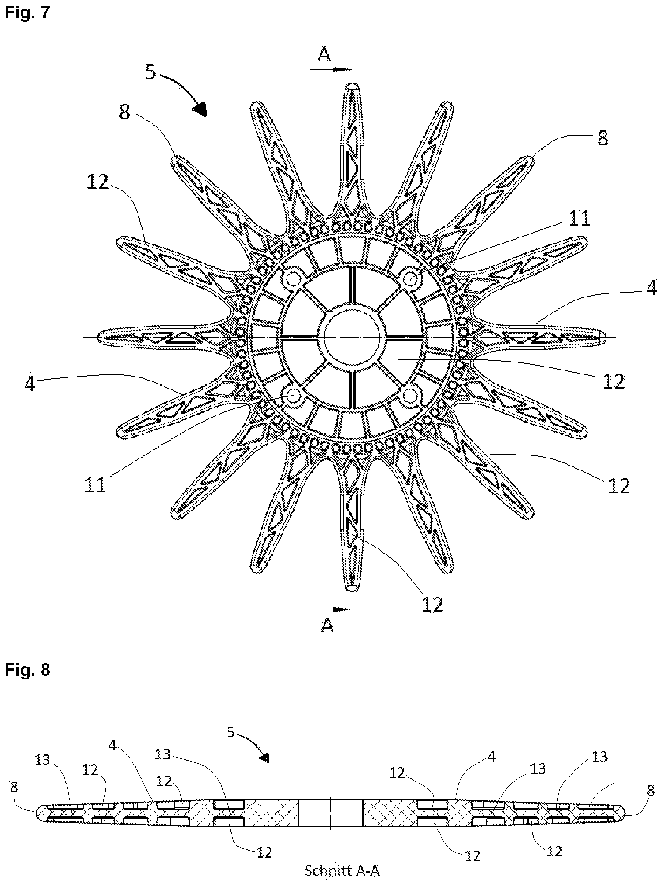

Fig. 6 zeigt eine perspektivische Ansicht eines zu einem erfindungsgemäßen Fingerhackenwerkzeuges gehörenden Sternrades 5 und Fig. 7 zeigt eine eine Aufsicht des Sternrades 5, gemäß Fig. 6. Die Finger 4 weisen hierbei eine texturierte Oberfläche auf, so dass sie nicht aus Vollmaterial bestehen, sondern Mittel zum Aufnehmen und/oder Fortschaffen von Lockermaterialien in Form von Vertiefungen 12, die an der Oberseite, an der Unterseite und/oder seitlich am Sternrad 5 angeordnet sein können, aufweisen. Hierdurch kommt es zu einer Materialeinsparung, so dass das Sternrad 5 kostengünstiger herstellbar ist.

Fig. 8 zeigt eine Schnittzeichnung des Sternrades, gemäß der Schnittlinie A - A aus Fig. 7. Bevorzugt sind die Vertiefungen 12, die gleich stark oder unterschiedlich tief ausgestaltet sein können, derart angeordnet, dass zwischen ihnen ein Mittelsteg 13 verbleibt. Bevorzugt ist der Mittelsteg 13 über die Länge des Fingers 4 gleich stark ausgebildet, wodurch die Vertiefungen 12 in Richtung Fingerende 8 immer flacher werden. Denkbar ist auch, dass zumindest ein Teil der Vertiefungen 12, beispielsweise die im Mittelteil des Sternrades 5 angeordneten Vertiefungen 12, miteinander verbunden sind, so dass der Mittelsteg 13 entfällt und eine durchgehende Aussparung (Öffnung) entsteht, wodurch noch mehr Material eingespart werden kann.

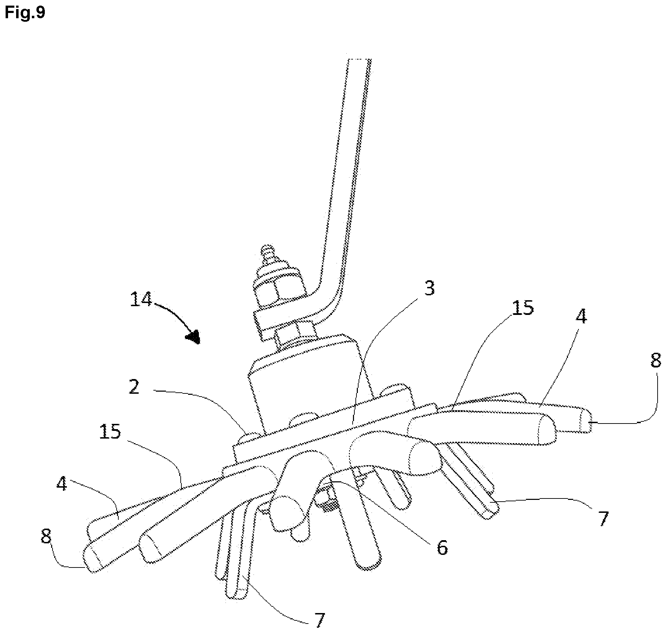

Fig. 9 zeigt eine perspektivische Ansicht eines erfindungsgemäßen Fingerhackenwerkzeuges 14 mit axial gebogenen Fingern 4. Dabei erfährt der Finger 4 ab einen Abknickpunkt 15 eine Biegung zum Boden hin.

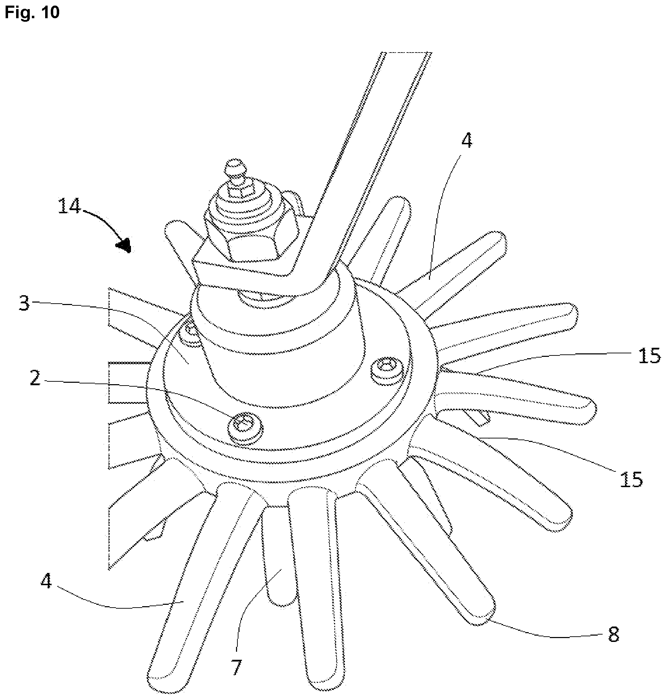

Fig. 10 zeigt eine Teilansicht des erfindungsgemäßen Fingerhackenwerkzeuges 14, gemäß Fig. 9.

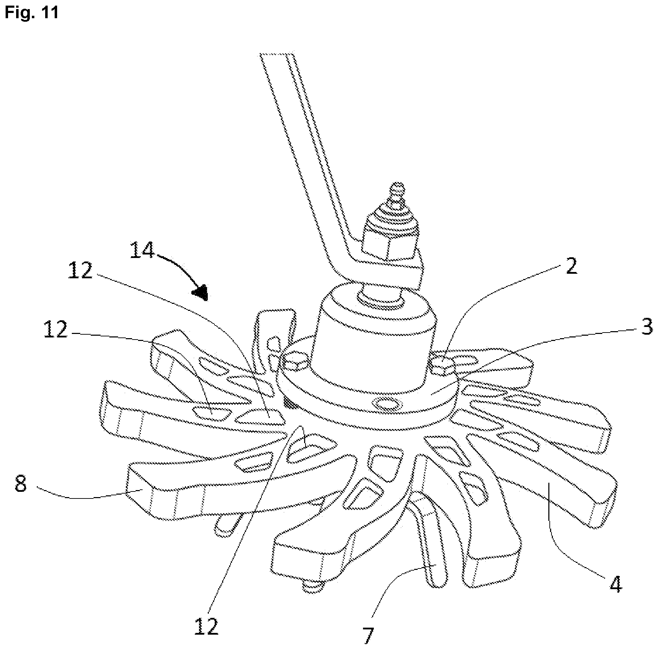

Fig. 11 zeigt eine perspektivische Ansicht eines erfindungsgemäßen Fingerhackenwerkzeuges 14 mit radial gebogenen Fingern 4.

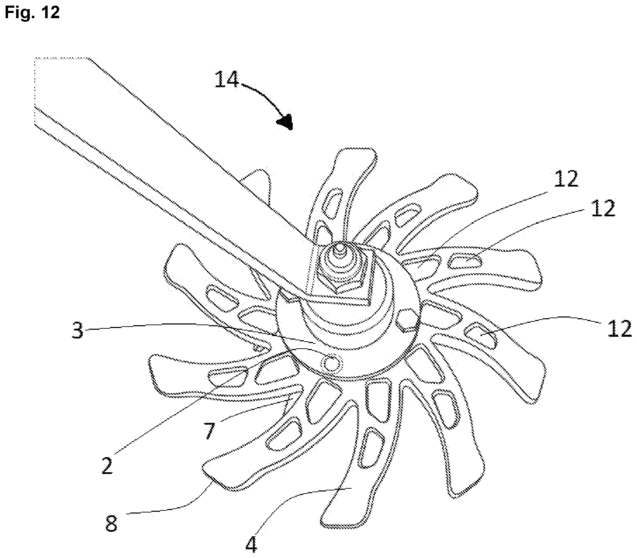

Fig. 12 zeigt eine andere Ansicht des erfindungsgemäßen Fingerhackenwerkzeuges 14, gemäß Fig. 11.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste

- 1: Drehachse
- 2: Verschraubung
- 3: Deckplatte
- 4: Finger
- 5: Stern rad
- 6: Antriebsplatte
- 7: Bodenantriebselement
- 8: Fingerende
- 9: Erhebung
- 10: Einbuchtung
- 11: Bohrung
- 12: Vertiefung
- 13: Mittelsteg
- 14: Fingerhackenwerkzeug
- 15: Abknickpunkt

## Patentansprüche

1. Fingerhackenwerkzeug (14) für ein Bodenbearbeitungsgerät, insbesondere ein Bodenbearbeitungsgerät für Reihenkulturen, wobei das Fingerhackenwerkzeug (14) eine Drehachse 1 aufweist,
- mit einem mehrere Finger (4) aufweisenden Sternrad (5), das eine dem Boden abgewandte Oberseite und eine dem Boden zugewandte Unterseite aufweist, und
- mit einem eine Drehachse aufweisenden Bodenantriebselement (7), **dadurch gekennzeichnet,**
**dass** die Drehachse (1) des Fingerhackenwerkzeugs (14) der Drehachse des Bodenantriebselementes (7) entspricht,
**dass** das Bodenantriebselement (7) formschlüssig mit dem Fingerhackenwerkzeug (14) verbunden ist,
**dass** mindestens ein Finger (4) mindestens ein Mittel zum Aufnehmen und/oder Fortschaffen von Lockermaterialien aufweist, wobei ein Mittel zum Aufnehmen und/oder Fortschaffen von Lockermaterialien an der Oberseite des Sternrades (5), der Unterseite des Sternrades (5) oder seitlich des Sternrades (5) angeordnet ist oder mehrere Mittel zum Aufnehmen und/oder Fortschaffen von Lockermaterialien an der Oberseite des Sternrades (5), der Unterseite des Sternrades (5) und/oder seitlich des Sternrades (5) angeordnet sind, und
**dass** das mindestens eine Mittel zum Aufnehmen und/oder Fortschaffen von Lockermaterialien eine Erhebung (9) und/oder das mindestens eine Mittel zum Aufnehmen und/oder Fortschaffen von Lockermaterialien eine Vertiefung (12) ist.

2. Fingerhackenwerkzeug (14), nach Anspruch 1,
**dadurch gekennzeichnet,**
**dass** der mindestens eine Finger (4) mindestens ein Fingerende (8) aufweist, an dem das Mittel zum Aufnehmen und/oder Fortschaffen von Lockermaterialien angeordnet ist.

3. Fingerhackenwerkzeug (14), nach Anspruch 1 oder Anspruch 2,
**dadurch gekennzeichnet,**
**dass** das Fingerhackenwerkzeug (14) zumindest teilweise eine strukturierte Oberfläche aufweist.

4. Fingerhackenwerkzeug (14), nach einem der vorhergehenden Ansprüche,
**dadurch gekennzeichnet,**
**dass** das Fingerhackenwerkzeug (14) zumindest teilweise eine texturierte Oberfläche aufweist.

5. Fingerhackenwerkzeug (14), nach einem der vorhergehenden Ansprüche,
**dadurch gekennzeichnet,**
**dass** mindestens ein Finger (4) axial und/oder radial gebogen ist.

6. Fingerhackenwerkzeug(14), nach einem der vorhergehenden Ansprüche,
**dadurch gekennzeichnet,**
**dass** das Fingerhackenwerkzeug (14) zumindest teilweise aus Kunststoff ist.

7. Verfahren zur mechanischen Bekämpfung von Beikräutern in Reihenkulturen mittels eines mindestens ein eine Drehachse (1) aufweisenden Fingerhackenwerkzeug (14) aufweisendes Bodenbearbeitungsgerätes, insbesondere eine Fingerhacke,
**dadurch gekennzeichnet,**
**dass** das Fingerhackenwerkzeug (14) ein durch ein eine Drehachse aufweisendes Bodenantriebselement (7) antreibbares und mehrere Finger (4) aufweisendes Sternrad (5), aufweist, wobei das Sternrad (5) eine dem Boden abgewandte Oberseite und eine dem Boden zugewandte Unterseite aufweist, und wobei die Drehachse (1) des Fingerhackenwerkzeugs (14) der Drehachse des Bodenantriebselementes (7) entspricht und wobei mindestens ein Finger (4) mindestens ein Mittel zum Aufnehmen und/oder Fortschaffen von Lockermaterialien aufweist, wodurch je nach Geräteeinstellung des Bodenbearbeitungsgerätes ein Eintrag von Lockermaterialien in die Reihe oder ein Austrag von Lockermaterialien aus der Reihe ermöglicht wird, wobei ein Mittel zum Aufnehmen und/oder Fortschaffen von Lockermaterialien an der Oberseite des Sternrades (5), der Unterseite des Sternrades (5) oder seitlich des Sternrades (5) angeordnet ist oder mehrere Mittel zum Aufnehmen und/oder Fortschaffen von Lockermaterialien an der Oberseite des Sternrades (5), der Unterseite des Sternrades (5) und/oder seitlich des Sternrades (5) angeordnet sind.

8. Verfahren, nach Anspruch 7,
**dadurch gekennzeichnet,**
**dass** als Fingerhackenwerkzeug (14) ein Fingerhackenwerkzeug (14) gemäß einem der Ansprüche 1 bis 6 eingesetzt wird.

## Claims

1. Finger weeder tool (14) for a soil cultivation device, more particularly a soil cultivation device for row crops
- with at least one finger (4) and
- with a ground driving element (7),
**characterised in that** at least one finger (4) comprises at least one means for picking up and/or removing loose materials and
**in that** the at least one means for picking up and/or removing loose materials is a protrusion (9) and/or the at least one means for picking up and/or removing loose materials is a recess (12).

2. Finger weeder tool (14) according to claim 1 **characterised in that**
the at least one finger (4) comprises at least one finger end (8), on which the means for picking up and/or removing loose materials is arranged.

3. Finger weeder tool (14) according to claim 1 or claim 2
**characterised in that** the finger weeder tool (14) at least partially comprises a structured surface.

4. Finger weeder tool (14) according to any one of the preceding claims
**characterised in that**
the finger weeder tool (14) at least partially comprises a textured surface.

5. Finger weeder tool (14) according to any one of the preceding claims
**characterised in that**
at least one finger (4) is axially and/or radially bent.

6. Finger weeder tool (14) according to any one of the preceding claims
**characterised in that**
the finger weeding tool (14) is at least partially made of plastic.

7. Method of mechanically combatting weeds in row crops by means of a soil cultivation device comprising at least one finger weeder tool (14), in particularly a finger weeder
**characterised in that**
the finger weeder tool (14) comprises at least finger (4), which can be driven by way of a ground driving element (7) and which comprises at least one means for picking up and/or removing loose materials, wherein depending on the device setting of the ground cultivation device, inclusion of loose materials into the row or removal of loose materials from the row is enabled, wherein the at least one means for picking up and/or removing loose materials is a protrusion (9) and/or the at least one means for picking up and/or removing loose materials is a recess (12).

8. Method according to claim 7
**characterised in that**
as the finger weeder tool (14) a finger weeder tool (14) according to any one of claims 1 to 6 is used.

## Revendications

1. Outil à doigt de sarclage (14) pour un appareil de traitement du sol, en particulier un appareil de traitement du sol pour des cultures en rangs,
- avec au moins un doigt (4) et
- avec un élément moteur au sol (7),
**caractérisé en ce qu'**
au moins un doigt (4) comporte au moins un moyen pour recevoir et/ou enlever des matériaux meubles et
**en ce qu'**au moins un moyen pour recevoir et/ou enlever des matériels meubles est une élévation (9) et/ou au moins un moyen pour recevoir et/ou enlever des matériaux meubles est une cavité (12).

2. Outil à doigt de sarclage (14) selon la revendication 1,
**caractérisé en ce qu'**
au moins un doigt (4) comporte au moins une extrémité de doigt (8) sur laquelle est disposé le moyen destiné à recevoir et/ou enlever des matériaux meubles.

3. Outil à doigt de sarclage (14) selon la revendication 1 ou la revendication 2,
**caractérisé en ce que**
l'outil à doigt de sarclage (14) comporte au moins en partie une surface structurée.

4. Outil à doigt de sarclage (14) selon l'une quelconque des revendications précédentes, **caractérisé en ce que** l'outil à doigt de sarclage (14) comporte au moins en partie une surface texturée.

5. Outil à doigt de sarclage (14) selon l'une quelconque des revendications précédentes, **caractérisé en ce qu'** au moins un doigt (4) est recourbé axialement et/ou radialement.

6. Outil à doigt de sarclage (14) selon l'une quelconque des revendications précédentes, **caractérisé en ce que** l'outil à doigt de sarclage (14) est au moins en partie en matière plastique.

7. Procédé destiné à la lutte mécanisée contre les mauvaises herbes dans les cultures en rangs au moyen d'au moins un appareil de traitement du sol comportant un outil à doigt de sarclage (14), en particulier un doigt de sarclage,
**caractérisé en ce que**
l'outil à doigt de sarclage (14) comporte au moins un doigt (4) pouvant être entraîné par un élément moteur au sol (7), qui comporte au moins un moyen pour recevoir et/ou enlever des matériaux meubles, une insertion des matériaux meubles dans le rang ou une évacuation des matériaux meubles du rang étant de ce fait permises en fonction du réglage d'appareil de l'appareil de traitement du sol, sachant qu'au moins un moyen destiné à recevoir et/ou enlever des matériaux meubles est une élévation (9) et/ou au moins un moyen destiné à recevoir et/ou enlever des matériaux meubles est une cavité (12) .

8. Procédé selon la revendication 7,
**caractérisé en ce qu'**
un outil à doigt de sarclage (14) est utilisé en tant qu'outil à doigt de sarclage (14) selon l'une quelconque des revendications 1 à 6.
